# EUROPÄISCHE PATENTSCHRIFT

(11) **EP 4 527 700 B1**
(45) Veröffentlichungstag und Bekanntmachung des Hinweises auf die Patenterteilung: **13.05.2026**
(21) Anmeldenummer: 24195095.5
(22) Anmeldetag: 19.08.2024
(51) Int. Cl.: B60T 7/04, B60T 7/06

(54) **ISOLATIONSEINRICHTUNG FÜR EIN BREMSBETÄTIGUNGSGESTÄNGE**
ISOLATION DEVICE FOR A BRAKE ACTUATING LINKAGE
DISPOSITIF D'ISOLATION POUR UNE TRINGLERIE D'ACTIONNEMENT DE FREIN

(30) Priorität: 25.09.2023 DE 102023125851
(43) Veröffentlichungstag der Anmeldung: 26.03.2025
(73) Patentinhaber: Deere & Company, Moline, IL 61265 (US)
(72) Erfinder: GREIF, FELIX P, 68163 Mannheim (DE); KNOBLOCH, ULRICH, 68163 Mannheim (DE); KNEER, BERND, 68163 Mannheim (DE); WILKEN, NILS, 68163 Mannheim (DE); BHATTACHARYA, SHRIDIP, 68163 Mannheim (DE); LETSCHER, JENS, 68163 Mannheim (DE); DENGLER, JONATHAN, 68163 Mannheim (DE); EDINGER, HOLGER, 68163 Mannheim (DE)
(74) Vertreter: Dehnhardt, Florian Christopher

(56) Entgegenhaltungen:
- DE-A1- 102020 204 106
- US-A1- 2023 031 027

## Beschreibung

Die Erfindung betrifft eine Isolationseinrichtung für ein Bremsbetätigungsgestänge.

Ein derartiges Bremsbetätigungsgestänge dient insbesondere bei landwirtschaftlichen Traktoren der Übertragung der über ein Fußpedal fahrerseitig ausgeübten Betätigungskraft auf ein Steuerelement eines Bremsventils zur hydraulischen Ansteuerung zugehöriger Radbremseinrichtungen. Betriebsbedingte Vibrationen, die seitens eines mit dem Bremsventil in Verbindung stehenden Hydrauliksystems verursacht werden, können über das Bremsbetätigungsgestänge in für den Fahrer wahrnehmbarer bzw. unangenehmer Art und Weise auf das Fußpedal rückübertragen werden. Hierbei können die zur Vibrationsisolierung üblicherweise eingesetzten Gummidämpfer Einfluss auf die über das Fußpedal fahrerseitig ausgeübte Betätigungskraft nehmen und in der Folge zu einem undefinierten bzw. in der erzielbaren Bremswirkung verlustbehafteten Betätigungsverhalten des Fußpedals führen.

Aus dem Stand der Technik ist das Dokument US 2023/031027 A1 bekannt.

Angesichts dessen ist es Aufgabe der vorliegenden Erfindung, eine hinsichtlich des Betätigungsverhaltens des Fußpedals verbesserte Isolationseinrichtung der eingangs genannten Art anzugeben, die zugleich sicherstellt, dass eine unerwünschte Rückübertragung von Vibrationen vom Bremsventil auf das Fußpedal verringert wird.

Diese Aufgabe wird durch eine Isolationseinrichtung für ein Bremsbetätigungsgestänge mit den Merkmalen des Patentanspruchs 1 gelöst.

Demgemäß weist die Isolationseinrichtung für ein Bremsbetätigungsgestänge neben einer zylindrischen Isolations- bzw. Dämpfungsbuchse, die eine innere Zylinderhülse, eine die innere Zylinderhülse unter Bildung eines Ringspalts koaxial umgebende äußere Zylinderhülse sowie ein den Ringspalt füllendes, mit den beiden Zylinderhülsen fest verbundenes elastisches Element umfasst, des Weiteren einen bremspedalseitigen Gestängeabschnitt und einen bremsventilseitigen Gestängeabschnitt auf, wobei die beiden Gestängeabschnitte die Isolationsbuchse entlang ihrer Zylinderachse auf gegenüberliegenden Seiten derart in Eingriff nehmen, dass das elastische Element unter der Wirkung eines auf die Gestängeabschnitte ausgeübten zunehmenden Betätigungsdrucks unter Parallelverschiebung der beiden Zylinderhülsen gegeneinander bis zum Erreichen eines die Parallelverschiebung begrenzenden mechanischen Endanschlags reversibel geschert wird.

In eingebautem Zustand ist die Isolationseinrichtung mit dem bremspedalseitigen Gestängeabschnitt an einem zur Bremsbetätigung vorgesehenen Fußpedal bzw. mit dem bremsventilseitigen Gestängeabschnitt an einem Stellelement eines Bremsventils zur hydraulischen Ansteuerung zugehöriger Radbremseinrichtungen angelenkt.

Die Scherfestigkeit des elastischen Elements wird vorzugsweise derart gewählt, dass bei Auftreten eines zur Erzielung einer erhöhten Bremsverzögerung typischen Betätigungsdrucks eine weitere Parallelverschiebung aufgrund des mechanischen Endanschlags blockiert und damit die Funktion des elastischen Elements überbrückt wird. Dies führt zu einem definierten und damit in der erzielbaren Bremswirkung verlustarmen Betätigungsverhalten des Fußpedals, wie es unter anderem bei der Ausführung eines Notbremsvorgangs erwünscht ist. Der hierfür aufzubringende Betätigungsdruck liegt typischerweise in der Größenordnung von 500 Newton.

Im Falle von Bremsvorgängen, wie sie für einen normalen Fahrbetrieb typisch sind, liegt der Betätigungsdruck indes unterhalb eines solchen kritischen Werts, sodass der mechanische Endanschlag nicht erreicht wird und die dämpfenden Eigenschaften des elastischen Elements insoweit unbeeinflusst bleiben.

Vorteilhafte Weiterbildungen der erfindungsgemäßen Isolationseinrichtung gehen aus den Unteransprüchen hervor.

Um eine entlang der Zylinderachse gerichtete Einleitung der über das Bremsbetätigungsgestänge wirkenden Betätigungskraft in die Isolationsbuchse sicherzustellen, umfasst der bremsventilseitige Gestängeabschnitt vorzugsweise einen von der inneren Zylinderhülse formschlüssig aufgenommenen Stößel, wobei die innere Zylinderhülse einen über das elastische Element hinausragenden Überstand aufweist, an dem sich ein an dem Stößel umlaufendes Betätigungselement unter der Wirkung des auf die Gestängeabschnitte ausgeübten Betätigungsdrucks abstützt.

Der Stößel ist insbesondere einstückiger Bestandteil des bremsventilseitigen Gestängeabschnitts, wobei an einem dem Stößel abgewandten Ende ein Kugelzapfen zur gelenkigen Anbringung in einer Kugelaufnahme bzw. -pfanne ausgebildet ist, die mit dem Stellelement des Bremsventils verbunden ist.

Bei dem Betätigungselement kann es sich insbesondere um eine auf ein Außengewinde des Stößels aufgeschraubte Gewindemutter handeln. Der Durchmesser des Außengewindes entspricht hierbei dem Innendurchmesser der inneren Zylinderhülse, sodass der gewünschte Formschluss zwischen den beiden Teilen hergestellt ist. Alternativ ist das Betätigungselement einstückiger Bestandteil des Stößels und an diesem als umlaufender Kragen ausgeformt. Der Stößel ist in diesem Fall gewindelos ausgebildet und verläuft flächig entlang einer inneren Wandung der inneren Zylinderhülse.

Des Weiteren ist es denkbar, dass der Stößel innerhalb der inneren Zylinderhülse entlang der Zylinderachse längsverschiebbar gelagert ist, was es in eingebautem Zustand des Bremsbetätigungsgestänges ermöglicht, durch Drehen der Gewindemutter in gewissem Umfang die Isolationsbuchse bzw. das von dieser umfasste elastische Element zum Zwecke der Anpassung des Dämpfungsverhaltens vorzuspannen. Hierzu handelt es sich bei dem Außengewinde insbesondere um ein Feingewinde, sodass eine präzise Einstellung möglich ist.

Ferner kann der bremspedalseitige Gestängeabschnitt ein glockenförmiges Gehäuse zur formschlüssigen Aufnahme der Isolationsbuchse umfassen, wobei innerhalb des glockenförmigen Gehäuses ein radial umlaufender Absatz ausgebildet ist, der eine innenliegende Stirnseite der inneren Zylinderhülse bei entspanntem elastischem Element in Abstand zu einem inneren Gehäusekopfende hält. Dies führt im Ergebnis zu einer besonders kompakten Bauform der Isolationseinrichtung, wobei die Isolationsbuchse innerhalb des glockenförmigen Gehäuses zusätzlich vor äußeren Einflüssen geschützt ist. Der Abstand zum inneren Gehäusekopfende stellt hierbei den für eine unter der Wirkung des Betätigungsdrucks nach innen gerichtete Auslenkung der inneren Zylinderhülse notwendigen Bewegungsfreiraum sicher.

Auch besteht die Möglichkeit, dass der mechanische Endanschlag durch das innere Gehäusekopfende gebildet ist, indem die innenliegende Stirnseite der inneren Zylinderhülse flächig mit diesem zur Anlage kommt. In diesem Fall erfolgt die Übertragung des Betätigungsdrucks zwischen den beiden Gestängeabschnitten unter Überbrückung des elastischen Elements mittels der dazwischenliegenden starren inneren Zylinderhülse.

Um eine nach innen gerichtete Auslenkung der inneren Zylinderhülse gegenüber der äußeren Zylinderhülse im Bereich des elastischen Elements nicht zu behindern, ist die Breite des radial umlaufenden Absatzes bevorzugt derart bemessen, dass diese die Wandstärke der sich daran abstützenden äußeren Zylinderhülse nicht überschreitet, mithin ausgeschlossen ist, dass dieser in den Ringspalt und damit dem Bewegungsbereich des elastischen Elements hineinragt.

Insbesondere bei einem von der inneren Zylinderhülse formschlüssig aufgenommenen Stößel kann für den Fall, dass ein Stößelende über die innenliegende Stirnseite der inneren Zylinderhülse herausragt, vorgesehen sein, dass sich an dem inneren Gehäusekopfende ein mit dem Verlauf der inneren Zylinderhülse fluchtendes Sackloch mit übereinstimmendem oder demgegenüber größerem Innendurchmesser befindet. Dies erlaubt es, dass das Stößelende in den durch das Sackloch geschaffenen Freiraum einzutauchen vermag, ohne dass die Möglichkeit einer Kollision mit dem angrenzenden Gehäusekopfende besteht.

Des Weiteren ist es möglich, dass an dem glockenförmigen Gehäuse ein entlang der Zylinderachse verlaufender Befestigungsstutzen ausgebildet ist, in dem ein freies bzw. erstes Ende einer Verbindungsstange des bremspedalseitigen Gestängeabschnitts aufgenommen ist, wobei ein dem freien bzw. ersten Ende abgewandtes zweites Ende ferner ein Befestigungsauge zur gelenkigen Anbringung an einer damit korrespondierenden Befestigungsstelle am Fußpedal aufweist. Entlang des freien bzw. ersten Endes der Verbindungsstange ist ein weiteres Außengewinde ausgebildet, das in ein im Befestigungsstutzen entlang der Zylinderachse verlaufendes Innengewinde eingeschraubt ist. Durch Drehen des Befestigungsstutzens und Gegenkontern mittels einer weiteren Gewindemutter ist eine gezielte Längenanpassung des Bremsbetätigungsgestänges möglich.

Die erfindungsgemäße Isolationseinrichtung für ein Bremsbetätigungsgestänge wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine bespielhafte Ausführungsform der erfindungsgemäßen Isolationseinrichtung als Bestandteil eines Bremsbetätigungsgestänges,
- Fig. 2: das in Fig. 1 wiedergegebene Bremsbetätigungsgestänge in eingebautem Zustand im Fußraum einer Fahrerkabine eines landwirtschaftlichen Traktors,
- Fig. 3: eine in Schnittdarstellung wiedergegebene Detailansicht der Isolationseinrichtung in unbetätigtem Zustand, und
- Fig. 4: die in Fig. 3 wiedergegebene Isolationseinrichtung in vollständig betätigtem Zustand.

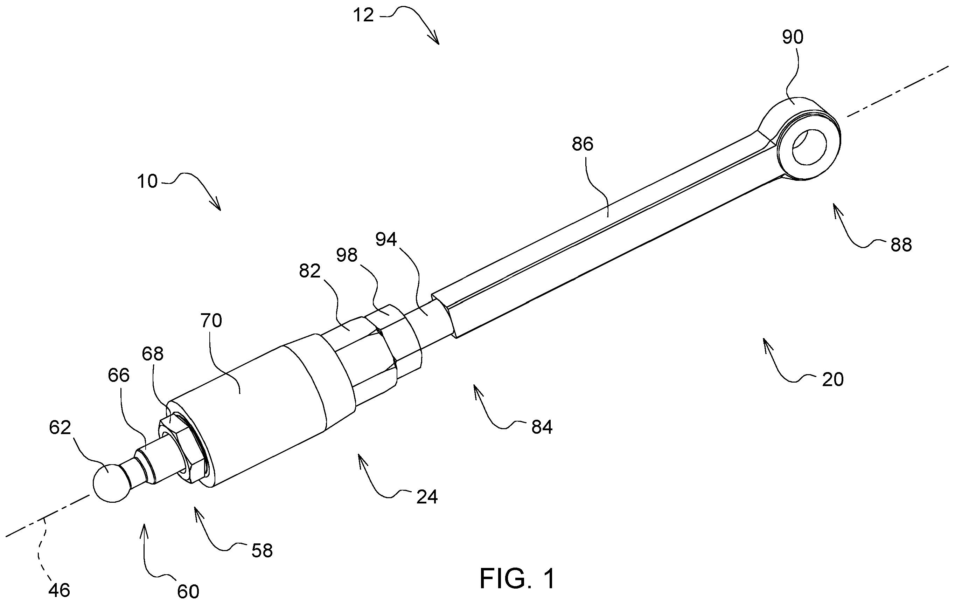

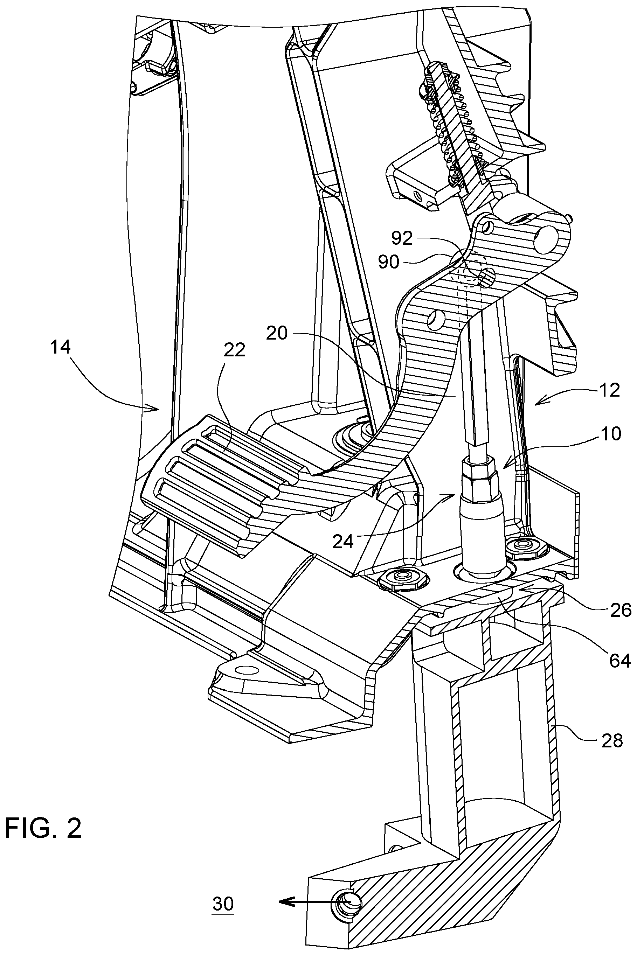

Fig. 1 zeigt eine bespielhafte Ausführungsform der erfindungsgemäßen Isolationseinrichtung 10 als Bestandteil eines Bremsbetätigungsgestänges 12, wobei sich die Isolationseinrichtung 10 entsprechend Fig. 2 in eingebautem Zustand im Fußraum 14 einer Fahrerkabine 16 eines nicht näher wiedergegebenen landwirtschaftlichen Traktors 18 befindet und mit einem bremspedalseitigen Gestängeabschnitt 20 an einem zur Bremsbetätigung vorgesehenen Fußpedal 22 bzw. mit einem bremsventilseitigen Gestängeabschnitt 24 an einem Stellelement 26 eines Bremsventils 28 zur hydraulischen Ansteuerung zugehöriger Radbremseinrichtungen 30 des landwirtschaftlichen Traktors 18 angelenkt ist.

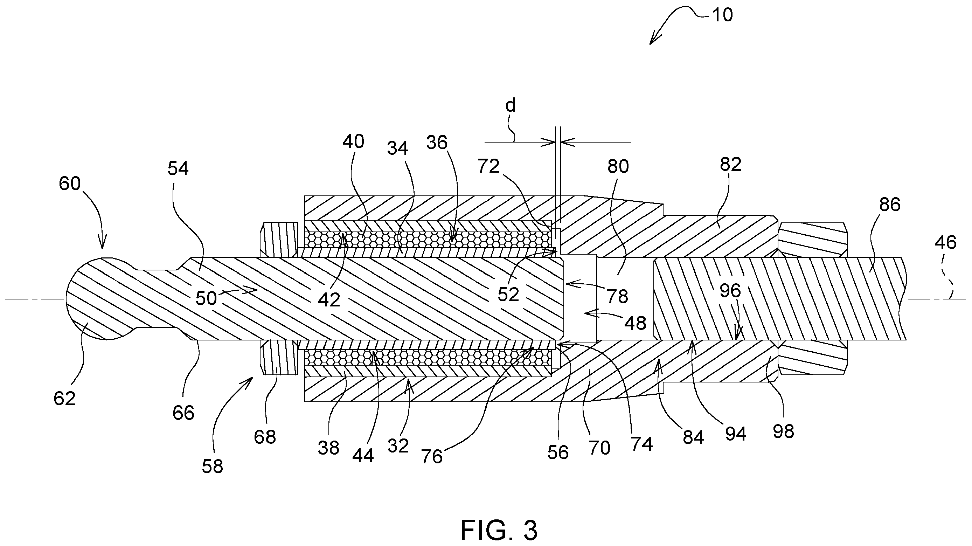

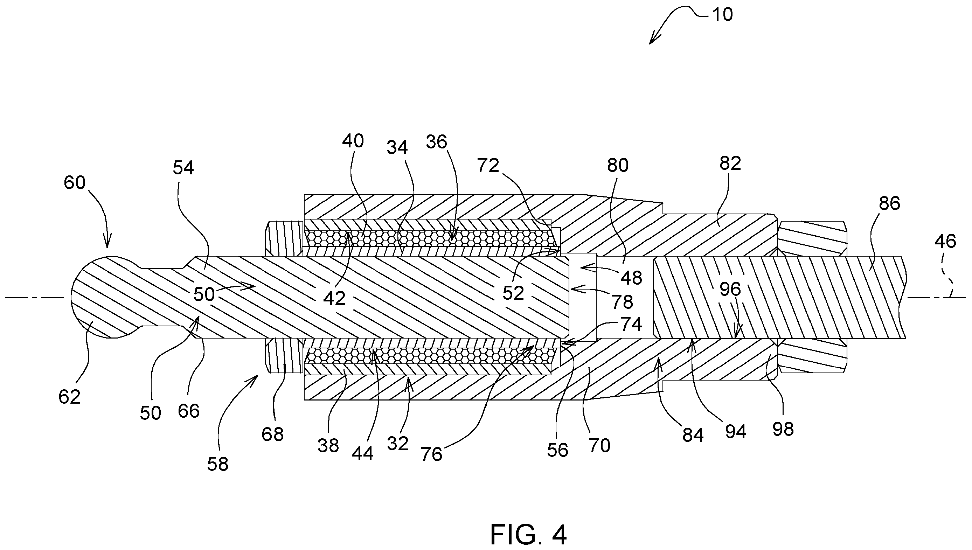

In Fig. 3 bzw. 4 ist ferner eine Detailansicht der Isolationseinrichtung 10 im Schnitt dargestellt. Demgemäß weist die Isolationseinrichtung 10 eine zylindrische Isolations- bzw. Dämpfungsbuchse 32 auf, die eine innere Zylinderhülse 34, eine die innere Zylinderhülse 34 unter Bildung eines Ringspalts 36 koaxial umgebende äußere Zylinderhülse 38 sowie ein den Ringspalt 36 füllendes, mit den beiden Zylinderhülsen 34, 38 fest verbundenes elastisches Element 40 umfasst. Das aus einer vibrationsdämpfenden Gummimischung bestehende elastische Element 40 ist durch Aufvulkanisieren mit der inneren bzw. äußeren zylindrischen Wandung 42, 44 der aus verzinktem bzw. passiviertem Stahl bestehenden inneren bzw. äußeren Zylinderhülse 34, 38 unlösbar verbunden.

Hierbei nehmen die beiden Gestängeabschnitte 20, 24 die Isolationsbuchse 32 entlang ihrer Zylinderachse 46 auf gegenüberliegenden Seiten 48, 50 derart in Eingriff, dass das elastische Element 40 ausgehend von einem in Fig. 3 wiedergegebenen unbetätigten Zustand unter der Wirkung eines auf die Gestängeabschnitte 20, 24 ausgeübten zunehmenden Betätigungsdrucks F_brake unter Parallelverschiebung der beiden Zylinderhülsen 34, 38 gegeneinander geschert wird, bis ein die Parallelverschiebung begrenzender mechanischer Endanschlag 52 erreicht ist. Letzteres entspricht einem in Fig. 4 wiedergegebenen vollständig betätigten Zustand des elastischen Elements 40. Die Scherung ist aufgrund der elastischen Eigenschaften der Isolationsbuchse 32 reversibel, d.h. das elastische Element 40 kehrt mit abnehmendem Betätigungsdruck F_brake von selbst in den unbetätigten Zustand zurück.

Die Scherfestigkeit des elastischen Elements 40 wird derart gewählt, dass bei Auftreten eines zur Erzielung einer erhöhten Bremsverzögerung typischen Betätigungsdrucks F_brake eine weitere Parallelverschiebung aufgrund des mechanischen Endanschlags 52 blockiert und damit die Funktion des elastischen Elements 40 überbrückt wird. Dies führt zu einem definierten und damit in der erzielbaren Bremswirkung verlustarmen Betätigungsverhalten des Fußpedals 22, wie es unter anderem bei der Ausführung eines Notbremsvorgangs erwünscht ist. Der hierfür aufzubringende Betätigungsdruck F_brake liegt typischerweise in der Größenordnung von 500 Newton.

Im Falle von Bremsvorgängen, wie sie für einen normalen Fahrbetrieb des landwirtschaftlichen Traktors 18 typisch sind, liegt der Betätigungsdruck F_brake indes unterhalb eines solchen kritischen Werts, sodass der mechanische Endanschlag 52 nicht erreicht wird und die dämpfenden Eigenschaften des elastischen Elements 40 insoweit unbeeinflusst bleiben.

Um eine entlang der Zylinderachse 46 gerichtete Einleitung der über das Bremsbetätigungsgestänge 12 wirkenden Betätigungskraft F_brake in die Isolationsbuchse 32 sicherzustellen, umfasst der bremsventilseitige Gestängeabschnitt 24 einen von der inneren Zylinderhülse 34 formschlüssig aufgenommenen Stößel 54. Die innere Zylinderhülse 34 weist einen über das elastische Element 40 hinausragenden Überstand 56 auf, an dem sich ein an dem Stößel 54 umlaufendes Betätigungselement 58 unter der Wirkung des auf die Gestängeabschnitte 20, 24 ausgeübten Betätigungsdrucks F_brake abstützt. Der Stößel 54 ist einstückiger Bestandteil des bremsventilseitigen Gestängeabschnitts 24, wobei an einem dem Stößel 54 abgewandten Ende 60 ein Kugelzapfen 62 zur gelenkigen Anbringung in einer in Fig. 2 sichtbaren Kugelaufnahme bzw. -pfanne 64 ausgebildet ist, die mit dem Stellelement 26 des Bremsventils 28 verbunden ist.

Beispielsgemäß handelt es sich bei dem Betätigungselement 58 um eine auf ein Außengewinde 66 des Stößels 54 aufgeschraubte Gewindemutter 68. Der Durchmesser des Außengewindes 66 entspricht hierbei dem Innendurchmesser der inneren Zylinderhülse 34, sodass der gewünschte Formschluss zwischen den beiden Teilen hergestellt ist.

Der Stößel 54 ist innerhalb der inneren Zylinderhülse 34 entlang der Zylinderachse 46 längsverschiebbar gelagert, was es in eingebautem Zustand des Bremsbetätigungsgestänges 12 ermöglicht, durch Drehen der Gewindemutter 68 in gewissem Umfang die Isolationsbuchse 32 bzw. das von dieser umfasste elastische Element 40 zum Zwecke der Anpassung des Dämpfungsverhaltens vorzuspannen. Hierzu handelt es sich bei dem Außengewinde 66 um ein Feingewinde, sodass eine präzise Einstellung möglich ist.

Des Weiteren umfasst der bremspedalseitige Gestängeabschnitt 20 ein glockenförmiges Gehäuse 70 zur formschlüssigen Aufnahme der Isolationsbuchse 32. Innerhalb des glockenförmigen Gehäuses 70 ist ein radial umlaufender Absatz 72 ausgebildet, der eine innenliegende Stirnseite 74 der inneren Zylinderhülse 34 bei entspanntem elastischem Element 40 in Abstand d zu einem inneren Gehäusekopfende 76 hält. Der Abstand d zum inneren Gehäusekopfende 76 stellt hierbei den für eine unter der Wirkung des Betätigungsdrucks F_brake nach innen gerichtete Auslenkung der inneren Zylinderhülse 34 notwendigen Bewegungsfreiraum sicher.

Vorliegend ist der mechanische Endanschlag 52 durch das innere Gehäusekopfende 76 gebildet, indem die innenliegende Stirnseite 74 der inneren Zylinderhülse 34 flächig mit diesem zur Anlage kommt. In diesem Fall erfolgt die Übertragung des Betätigungsdrucks F_brake zwischen den beiden Gestängeabschnitten 20, 24 unter Überbrückung des elastischen Elements 40 mittels der dazwischenliegenden starren inneren Zylinderhülse 34.

Um eine nach innen gerichtete Auslenkung der inneren Zylinderhülse 34 gegenüber der äußeren Zylinderhülse 38 im Bereich des elastischen Elements 40 nicht zu behindern, ist die Breite des radial umlaufenden Absatzes 72 derart bemessen, dass diese die Wandstärke der sich daran abstützenden äußeren Zylinderhülse 38 nicht überschreitet, mithin ausgeschlossen ist, dass dieser in den Ringspalt 36 und damit dem Bewegungsbereich des elastischen Elements 40 hineinragt.

Für den in Fig. 3 bzw. 4 gezeigten Fall, dass ein Stößelende 78 über die innenliegende Stirnseite 74 der inneren Zylinderhülse 34 herausragt, befindet sich an dem inneren Gehäusekopfende 76 ein mit dem Verlauf der inneren Zylinderhülse 34 fluchtendes Sackloch 80 mit übereinstimmendem oder demgegenüber größerem Innendurchmesser. Das Stößelende 78 vermag in diesem Fall in den durch das Sackloch 80 geschaffenen Freiraum einzutauchen, ohne dass die Möglichkeit einer Kollision mit dem angrenzenden Gehäusekopfende 76 besteht.

Zusätzlich ist an dem glockenförmigen Gehäuse 70 ein entlang der Zylinderachse 46 verlaufender Befestigungsstutzen 82 ausgebildet. In dem Befestigungsstutzen 82 ist ein freies bzw. erstes Ende 84 einer Verbindungsstange 86 des bremspedalseitigen Gestängeabschnitts 20 aufgenommen, ein dem ersten Ende 84 abgewandtes zweites Ende 88 weist ferner ein Befestigungsauge 90 zur gelenkigen Anbringung an einer damit korrespondierenden Befestigungsstelle 92 am Fußpedal 22 auf (siehe auch Fig. 2)

Entlang des ersten Endes 84 der Verbindungsstange 86 ist ein weiteres Außengewinde 94 ausgebildet, das in ein im Befestigungsstutzen 82 entlang der Zylinderachse 46 verlaufendes Innengewinde 96 eingeschraubt ist. Durch Drehen des Befestigungsstutzens 82 und Gegenkontern mittels einer weiteren Gewindemutter 98 ist eine gezielte Längenanpassung des Bremsbetätigungsgestänges 12 möglich.

## Patentansprüche

1. Isolationseinrichtung für ein Bremsbetätigungsgestänge, mit einer zylindrischen Isolations- bzw. Dämpfungsbuchse (32), die eine innere Zylinderhülse (34), eine die innere Zylinderhülse (34) unter Bildung eines Ringspalts (36) koaxial umgebende äußere Zylinderhülse (38) sowie ein den Ringspalt (36) füllendes, mit den beiden Zylinderhülsen (34, 38) fest verbundenes elastisches Element (40) umfasst, mit einem bremspedalseitigen Gestängeabschnitt (20) und mit einem bremsventilseitigen Gestängeabschnitt (24), wobei die beiden Gestängeabschnitte (20, 24) die Isolationsbuchse (32) entlang ihrer Zylinderachse (46) auf gegenüberliegenden Seiten (48, 50) derart in Eingriff nehmen, dass das elastische Element (40) unter der Wirkung eines auf die Gestängeabschnitte (20, 24) ausgeübten zunehmenden Betätigungsdrucks (F_brake) unter Parallelverschiebung der beiden Zylinderhülsen (34, 38) gegeneinander bis zum Erreichen eines die Parallelverschiebung begrenzenden mechanischen Endanschlags (52) reversibel geschert wird.

2. Isolationseinrichtung nach Anspruch 1, **dadurch gekennzeichnet, dass** der bremsventilseitige Gestängeabschnitt (24) einen von der inneren Zylinderhülse (34) formschlüssig aufgenommenen Stößel (54) umfasst, wobei die innere Zylinderhülse (34) einen über das elastische Element (40) hinausragenden Überstand (56) aufweist, an dem sich ein an dem Stößel (54) umlaufendes Betätigungselement (58) unter der Wirkung des auf die Gestängeabschnitte (20, 24) ausgeübten Betätigungsdrucks (F_brake) abstützt.

3. Isolationseinrichtung nach Anspruch 2, **dadurch gekennzeichnet, dass** der Stößel (54) einstückiger Bestandteil des bremsventilseitigen Gestängeabschnitts (24) ist.

4. Isolationseinrichtung nach Anspruch 2 oder 3, **dadurch gekennzeichnet, dass** es sich bei dem Betätigungselement (58) um eine auf ein Außengewinde (66) des Stößels (54) aufgeschraubte Gewindemutter (68) handelt.

5. Isolationseinrichtung nach wenigstens einem der Ansprüche 2 bis 4, **dadurch gekennzeichnet, dass** der Stößel (54) innerhalb der inneren Zylinderhülse (34) entlang der Zylinderachse (46) längsverschiebbar gelagert ist.

6. Isolationseinrichtung nach wenigstens einem der vorhergehenden Ansprüche, **dadurch gekennzeichnet, dass** der bremspedalseitige Gestängeabschnitt (20) ein glockenförmiges Gehäuse (70) zur formschlüssigen Aufnahme der Isolationsbuchse (32) umfasst, wobei innerhalb des glockenförmigen Gehäuses (70) ein radial umlaufender Absatz (72) ausgebildet ist, der eine innenliegende Stirnseite (74) der inneren Zylinderhülse (34) bei entspanntem elastischem Element (40) in Abstand (d) zu einem inneren Gehäusekopfende (76) hält.

7. Isolationseinrichtung nach Anspruch 6, **dadurch gekennzeichnet, dass** der mechanische Endanschlag (52) durch das innere Gehäusekopfende (76) gebildet ist, indem die innenliegende Stirnseite (74) der inneren Zylinderhülse (34) flächig mit diesem zur Anlage kommt.

8. Isolationseinrichtung nach Anspruch 6 oder 7, **dadurch gekennzeichnet, dass** die Breite des radial umlaufenden Absatzes (72) bevorzugt derart bemessen ist, dass diese die Wandstärke der sich daran abstützenden äußeren Zylinderhülse (38) nicht überschreitet.

9. Isolationseinrichtung nach wenigstens einem der Ansprüche 6 bis 8, **dadurch gekennzeichnet, dass** sich an dem inneren Gehäusekopfende (76) ein mit dem Verlauf der inneren Zylinderhülse (34) fluchtendes Sackloch (80) mit übereinstimmendem oder demgegenüber größerem Innendurchmesser befindet.

10. Isolationseinrichtung nach wenigstens einem der Ansprüche 6 bis 9, **dadurch gekennzeichnet, dass** an dem glockenförmigen Gehäuse (70) ein entlang der Zylinderachse (46) verlaufender Befestigungsstutzen (82) ausgebildet ist, in dem ein freies Ende (84) einer Verbindungsstange (86) des bremspedalseitigen Gestängeabschnitts (20) aufgenommen ist, wobei entlang des freien Endes (84) der Verbindungsstange (86) ein weiteres Außengewinde (94) ausgebildet ist, das in ein im Befestigungsstutzen (82) entlang der Zylinderachse (46) verlaufendes Innengewinde (96) eingeschraubt ist.

## Claims

1. Insulating device for a brake actuating linkage, with a cylindrical insulating or damping bushing (32) which comprises an inner cylinder sleeve (34), an outer cylinder sleeve (38) coaxially surrounding the inner cylinder sleeve (34) so as to form an annular gap (36), and an elastic element (40) which fills the annular gap (36) and is fixedly connected to the two cylinder sleeves (34, 38), with a brake-pedal-side linkage section (20) and a brake-valve-side linkage section (24), the two linkage sections (20, 24) engaging the insulating bushing (32) along their cylinder axis (46) on opposite sides (48, 50) in such a way that the elastic element (40) is sheared reversibly under the action of an increasing actuating pressure (F_brake) applied to the linkage sections (20, 24) by parallel displacement of the two cylinder sleeves (34, 38) in relation to each other until a mechanical end stop (52) limiting the parallel displacement is reached.

2. Insulating device according to Claim 1, **characterized in that** the brake-valve-side linkage section (24) comprises a plunger (54) which is received in a form-fitting manner by the inner cylinder sleeve (34), wherein the inner cylinder sleeve (34) has a protrusion (56) which projects beyond the elastic element (40) and on which an actuating element (58) surrounding the plunger (54) is supported under the action of the actuating pressure (F_brake) applied to the linkage sections (20, 24).

3. Insulating device according to Claim 2, **characterized in that** the plunger (54) is an integral component of the brake-valve-side linkage section (24).

4. Insulating device according to Claim 2 or 3, **characterized in that** the actuating element (58) is a threaded nut (68) screwed onto an external thread (66) of the plunger (54).

5. Insulating device according to at least one of Claims 2 to 4, **characterized in that** the plunger (54) is mounted longitudinally displaceably along the cylinder axis (46) within the inner cylinder sleeve (34).

6. Insulating device according to at least one of the preceding claims, **characterized in that** the brake-pedal-side linkage section (20) comprises a bell-shaped housing (70) for the form-fitting receiving of the insulating bushing (32), wherein a radially surrounding shoulder (72) is formed within the bell-shaped housing (70), said shoulder keeping an inner end face (74) of the inner cylinder sleeve (34) at a distance (d) from an inner housing head end (76) when the elastic element (40) is relaxed.

7. Insulating device according to Claim 6, **characterized in that** the mechanical end stop (52) is formed by the inner housing head end (76), by the inner end face (74) of the inner cylinder sleeve (34) coming to rest flat against said housing head end.

8. Insulating device according to Claim 6 or 7, **characterized in that** the width of the radially surrounding shoulder (72) is preferably dimensioned such that it does not exceed the wall thickness of the outer cylinder sleeve (38) supported thereon.

9. Insulating device according to at least one of Claims 6 to 8, **characterized in that** at the inner housing head end (76) there is a blind hole (80) which is aligned with the profile of the inner cylinder sleeve (34) and has an inner diameter which corresponds thereto or is larger.

10. Insulating device according to at least one of Claims 6 to 9, **characterized in that** a fastening stub (82) running along the cylinder axis (46) is formed on the bell-shaped housing (70), in which fastening stub a free end (84) of a connecting rod (86) of the brake-pedal-side linkage section (20) is received, wherein a further external thread (94) is formed along the free end (84) of the connecting rod (86) and is screwed into an internal thread (96) running along the cylinder axis (46) in the fastening stub (82).

## Revendications

1. Dispositif d'isolation pour une tringlerie d'actionnement de frein, avec une douille cylindrique d'isolation ou d'amortissement (32), qui comprend un manchon cylindrique intérieur (34), un manchon cylindrique extérieur (38) entourant coaxialement le manchon cylindrique intérieur (34) en formant une fente annulaire (36), ainsi qu'un élément élastique (40) remplissant la fente annulaire (36) et relié de manière solidaire aux deux manchons cylindriques (34, 38), avec une section de tringlerie côté pédale de frein (20) et avec une section de tringlerie côté soupape de frein (24), les deux sections de tringlerie (20, 24) prenant en prise la douille d'isolation (32) le long de son axe de cylindre (46) sur des côtés opposés (48, 50) de telle manière que l'élément élastique (40) est cisaillé de manière réversible sous l'effet d'une pression d'actionnement croissante (F_brake) exercée sur les sections de tringlerie (20, 24) en faisant coulisser parallèlement les deux manchons cylindriques (34, 38) l'un contre l'autre jusqu'à ce qu'une butée d'extrémité mécanique (52) limitant le coulissement parallèle soit atteinte.

2. Dispositif d'isolation selon la revendication 1, **caractérisé en ce que** la section de tringlerie (24) côté soupape de frein comprend un poussoir (54) reçu par complémentarité de forme par le manchon cylindrique intérieur (34), le manchon cylindrique intérieur (34) comportant un débord (56) dépassant de l'élément élastique (40), sur lequel un élément d'actionnement (58) tournant sur le poussoir (54) prend appui sous l'effet de la pression d'actionnement (F_brake) exercée sur les sections de tringlerie (20, 24).

3. Dispositif d'isolation selon la revendication 2, **caractérisé en ce que** le poussoir (54) est un élément constitutif monobloc de la section de tringlerie (24) côté soupape de frein.

4. Dispositif d'isolation selon la revendication 2 ou 3, **caractérisé en ce que** l'élément d'actionnement (58) est un écrou fileté (68) vissé sur un filetage extérieur (66) du poussoir (54).

5. Dispositif d'isolation selon au moins l'une des revendications 2 à 4, **caractérisé en ce que** le poussoir (54) est monté de manière à pouvoir coulisser longitudinalement le long de l'axe (46) de cylindre à l'intérieur du manchon cylindrique intérieur (34).

6. Dispositif d'isolation selon au moins l'une des revendications précédentes, **caractérisé en ce que** la section de tringlerie côté pédale de frein (20) comprend un boîtier (70) en forme de cloche destiné à recevoir par complémentarité de forme la douille d'isolation (32), un épaulement radialement périphérique (72) étant formé à l'intérieur du boîtier (70) en forme de cloche, lequel maintient un côté frontal (74) situé à l'intérieur du manchon cylindrique intérieur (34) à une distance (d) d'une extrémité de tête intérieure (76) de boîtier lorsque l'élément élastique (40) est détendu.

7. Dispositif d'isolation selon la revendication 6, **caractérisé en ce que** la butée d'extrémité mécanique (52) est formée par l'extrémité de tête intérieure (76) de boîtier **en ce que** le côté frontal (74) situé à l'intérieur du manchon cylindrique intérieur (34) vient en appui à plat avec celle-ci.

8. Dispositif d'isolation selon la revendication 6 ou 7, **caractérisé en ce que** la largeur de l'épaulement radialement périphérique (72) est de manière préférée dimensionnée de telle manière que celle-ci ne dépasse pas l'épaisseur de paroi du manchon cylindrique extérieur (38) prenant appui sur celui-ci.

9. Dispositif d'isolation selon au moins l'une des revendications 6 à 8, **caractérisé en ce qu'**un trou borgne (80) aligné sur le profil du manchon cylindrique intérieur (34) avec un diamètre concordant ou supérieur par rapport à celui-ci se trouve sur l'extrémité de tête intérieure (76) de boîtier.

10. Dispositif d'isolation selon au moins l'une des revendications 6 à 9, **caractérisé en ce qu'**est formée, sur le boîtier (70) en forme de cloche, une tubulure de fixation (82) s'étendant le long de l'axe (46) de cylindre, dans laquelle est reçue une extrémité libre (84) d'une bielle (86) de la section de tringlerie côté pédale de frein (20), un autre filetage extérieur (94) étant formé le long de l'extrémité libre (84) de la bielle (86), qui est vissé dans un filetage intérieur (96) s'étendant le long de l'axe (46) de cylindre dans la tubulure de fixation (82).
